# EUROPÄISCHE PATENTSCHRIFT

(11) **EP 2 287 835 B1**
(45) Veröffentlichungstag und Bekanntmachung des Hinweises auf die Patenterteilung: **23.05.2012**
(21) Anmeldenummer: 10169043.6
(22) Anmeldetag: 09.07.2010
(51) Int. Cl.: G10L 15/00, G10L 15/22, H04M 7/00

(54) **Automatisiertes Auswerten der Nutzbarkeit eines Sprachdialogsystems**
Automated evaluation of the usability of a speech dialogue system
Evaluation automatisée de l'utilisation d'un système de dialogue vocal

(30) Priorität: 10.07.2009 EP 09165180
(43) Veröffentlichungstag der Anmeldung: 23.02.2011
(73) Patentinhaber: Deutsche Telekom AG, 53113 Bonn (DE); Deutsches Forschungsinstitut für Künstliche Intelligenz GmbH, 67663 Kaiserslautern (DE); Technische Universität Berlin, 10623 Berlin (DE)
(72) Erfinder: Schleicher Robert, D- 10785 Berlin (DE); Reithinger Norbert, D- 10587 Berlin (DE); Möller Sebastian, D- 10405 Berlin (DE); Engelbrecht Klaus-Peter, D - 10589 Berlin (DE); Gödde Florian, D - 10553 Berlin (DE); Butenkov Dimitry, D - 10587 Berlin (DE); Scheffler Tatjana, D - 10551 Berlin (DE); Roller Roland, D - 10245 Berlin (DE)
(74) Vertreter: Vossius & Partner

(56) Entgegenhaltungen:
- WO-A1-2004/072862
- US-A1- 2003 105 630
- US-A1- 2003 187 639

## Beschreibung

### Technisches Gebiet

Die Erfindung betrifft ein Evaluationssystem gemäß dem Oberbegriff des unabhängigen Anspruchs 1. Solche Evaluationssysteme mit einer Benutzersimulationseinheit zum Simulieren des Verhaltens eines Benutzers des Sprachdialogsystems, einer Aufgabensimulationseinheit zum Simulieren eines vom Sprachdialogsystem zu bearbeitenden Ablaufs, einer Wissensdatenbank und einer Auswerteeinheit, können zum automatisierten Auswerten der Nutzbarkeit eines Sprachdialogsystems eingesetzt werden. Dabei kann ein Ablauf eines Dialogs mit dem Sprachdiatogsystem über den durch die Benutzersimulationseinheit simulierten Benutzer und den durch die Aufgabensimulationseinheit simulierten Ablauf von der Auswerteeinheit mittels der Wissensdatenbank ausgewertet werden.

### Stand der Technik

Zur automatisierten Betreuung und Bedienung von Kunden werden heute zunehmend interaktive Systeme und insbesondere Sprachdialogsysteme (SDS) in verschiedenen Anwendungsgebieten beziehungsweise Domänen eingesetzt. Entsprechend werden zunehmend solche SDS unter Verwendung von geeigneten Werkzeugen und Verfahren entwickelt. Dabei ist das Messen und Testen der Qualität und Bedienbarkeit von SDS ein komplexer kontinuierlicher Prozess, der es häufig nötig macht, eine Mehrzahl von aufwändigen Experimenten durchzuführen. Beispielsweise werden kontrollierte Laborexperimente mit einer Vielzahl von Teilnehmern durchgeführt, wobei die Teilnehmer häufig dazu neigen, ein unnatürliches Kommunikationsverhalten zu zeigen. Beispielsweise sind Teilnehmer solcher Laborexperimente häufig zurückhaltend damit, aufzuhängen oder sogenannte Barge-Ins durchzuführen und sie sind häufig auch zu fokussiert auf das Ziel des Laborexperiments. Unter dem Begriff "Barge-In" wird in diesem Zusammenhang ein das Unterbrechen eines Systemprompts durch den Benutzer verstanden, zum Beispiel um direkt zu einem nächsten beziehungsweise anderen Dialogschritt zu gelangen. Solche Laborexperimente sind also häufig wenig reproduzierbar, aufwändig und teuer. Sie sind zudem typischerweise erst dann möglich, wenn das zu testende beziehungsweise auszuwertende SDS schon größtenteils fertig entwickelt ist. Im Laborexperiment ermittelte Verbesserungsmöglichkeiten können entsprechend einen großen Entwicklungsaufwand zur Implementierung der Verbesserung in das SDS nach sich ziehen. Für das Testen und Auswerten des SDS während der eigentlichen Entwicklung des SDS sind Laborexperimente typischerweise zu kosten- und zeitintensiv.

Beispielsweise sind in der WO 2004/072862 A1 ein System zur Voraussage der Genauigkeit einer Spracherkennung und in der US 2003/0187639 A1 ein System zur Auswertung automatischer Spracherkennungstelefondienste beschrieben.

Um den Nachteilen von solchen Laborexperimenten zu begegnen, sind heute teilweise auch halbautomatische oder vollautomatische Testsysteme im Einsatz, mit denen die SDS auch in einer frühen Entwicklungsstufe beziehungsweise während der Entwicklung bezüglich ihrer Benutzbarkeit und Anwendbarkeit getestet werden können. In solchen Testsystemen werden typischerweise Modelle bezüglich des Zielbenutzers des SDS, bezüglich des zu testenden SDS selbst, bezüglich der zu lösenden Aufgabe und bezüglich des Wissens über das Anwendungsgebiets beziehungsweise der Domäne des SDS erstellt und ausgewertet.

Beispielsweise ist in Möller, S., Englert, R., Engelbrecht, K., Hafner, V., Jameson, A., Oulasvirta, A., Raake, A., Reithinger, N. (2006), MeMo: Towards Automatic Usability Evaluation of Spoken Dialogue Services by User Error Simulations, in: Proc. 9th Int. Conf. on Spoken Language Processing (Interspeech 2006 - ICSLP), US-Pittsburgh PA, 1786-1789 ein solcher Ansatz zur Auswertung der Benutzbarkeit von interaktiven Systemen wie beispielsweise von SDS vorgestellt. Das darin beschriebene Verfahren basiert wie erwähnt unter anderem auf Modellen, die das Verhalten der Zielbenutzer des interaktiven Systems und das interaktive System selbst in seinen typischen Interaktionen beschreiben. Diese Modelle beschreiben die Aktionen der Zielbenutzer, wie beispielsweise das Anklicken von Knöpfen, das Eingeben von Text oder Sprache, das Bewegen eines Mauszeigers oder das Markieren von Textstellen, sowie auch die Aktionen des interaktiven Systems, wie beispielsweise Darstellen einer grafischen Benutzeroberfläche (GUI), Hervorheben eines Elements in der GUI oder Ausgeben eines gesprochenen Texts, während einer Interaktion. Dabei sind die Modelle abgeleitet aus theoretischen Erwägungen, wie beispielsweise Benutzerfehlerklassierungen, dem Wissen von Benutzungsexperten oder Benutzungsanweisungen, sowie aus empirischen Daten, wie beispielsweise aus Testinteraktionsaufzeichnungen. Diese Modelle geben dann Eingaben an eine automatische Testeinheit weiter, welche das eigentliche Herz des Testsystems darstellt. Diese Testeinheit integriert die Benutzer- und Systemmodelle in einen automatischen Testlauf, simuliert Interaktionen und generiert Aufzeichnungen. Die Aufzeichnungsprotokolle dienen dem automatischen Auffinden von vorhergesehenem und potentiell fehlerhaftem Benutzerverhalten und beinhalten Unterschiede zwischen Benutzer- und Systemmodellen, die problematische Interaktionen nach sich ziehen können. Unter Verwendung von geeigneter Gewichtung der Unterschiede berechnet ein Vorhersagealgorithmus ein Benutzbarkeitsprofil aus den Aufzeichnungsprotokollen. Dieses Benutzbarkeitsprofil beschreibt den Einfluss von Fehlern bezüglich Geschwindigkeits- und Qualitätsindikatoren, die sich auf Effektivität, Effizienz und Benutzerzufriedenheit beziehen.

Ein Problem bei solchen Testsystemen besteht darin, dass durch das Abbilden des zu testenden SDS in Modellen zumeist Vereinfachungen am SDS generiert werden, die zwar eine möglichst effizientes Abbilden ermöglichen sollen aber kein exaktes Abbild des SDS darstellen. Zudem muss dabei das SDS jeweils als ganzes in den Modellen abgebildet werden, was bedeutet, dass es zumindest konzeptionell mehr oder weniger abgeschlossen sein muss. Schließlich ist das Abbilden des zu testenden SDS in Modellen verhältnismäßig aufwändig und muss bei einer Weiterentwicklung des SDS jeweils wieder neu durchgeführt beziehungsweise angepasst werden.

Der Erfindung liegt daher die Aufgabe zu Grunde ein System vorzuschlagen, das ein verhältnismäßig effizientes, ausreichend genaues und kostengünstiges Auswerten von Sprachdialogsystemen bezügliche deren Benutzbarkeit ermöglicht insbesondere auch während einer Entwicklung des Sprachdialogsystems.

### Darstellung der Erfindung

Die Aufgabe wird erfindungsgemäß durch ein Evaluationssystem gelöst, wie es durch die Merkmale des unabhängigen Anspruchs 1 charakterisiert ist sowie durch ein Computerprogramm, wie es durch die Merkmale des unabhängigen Anspruchs 13 definiert ist. Vorteilhafte Ausgestaltungen des erfindungsgemäßen Evaluationssystems ergeben sich aus den Merkmalen der abhängigen Ansprüche.

Insbesondere umfasst ein Evaluationssystem zum automatisierten Auswerten der Nutzbarkeit eines Sprachdialogsystems (SDS) eine Benutzersimulationseinheit zum Simulieren des Verhaltens eines Benutzers des SDS, eine Aufgabensimulationseinheit zum Simulieren eines vom SDS zu bearbeitenden Ablaufs, eine Wissensdatenbank und eine Auswerteeinheit. Ein Ablauf eines Dialogs mit dem SDS ist über den durch die Benutzersimulationseinheit simulierten Benutzer und den durch die Aufgabensimulationseinheit simulierten Ablauf von der Auswerteeinheit mittels der Wissensdatenbank auswertbar. Das Evaluationssystem umfasst dabei weiter eine mit dem SDS verbindbare Schnittstelle und eine Kommunikationseinheit, wobei die Kommunikationseinheit dazu ausgestaltet ist, den Dialog mit dem SDS über die Schnittstelle zu führen. Unter verbindbar bezüglich des Evaluationssystems und des SDS wird in diesem Zusammenhang eine Kommunikationsverbindung verstanden, die ermöglicht, dass das Evaluationssystem mit dem SDS kommunizieren kann. Beispielsweise kann eine solche Verbindung über den Austausch von Textdateien oder Sprachdateien in einem bestimmten Format realisiert sein, wobei beispielsweise die Kommunikationseinheit dazu Textfiles oder Sprachfiles in dem vom SDS verwertbaren Format erzeugt, die dann über die Schnittstelle an das SDS übergeben werden. Das Evaluationssystem kann beispielsweise auf einem Computer implementiert sein, der über die Schnittstelle mit dem SDS verbindbar ist. Über die Ausgestaltung des Evaluationssystems mit der Schnittstelle und der Kommunikationseinheit kann erreicht werden, dass direkt das zu evaluierende SDS automatisch oder zumindest halbautomatisch getestet und ausgewertet werden kann. Ein vorgängiges Abbilden des zu evaluierenden SDS in einem Modell ist dabei nicht notwendig. Ebenfalls ist nicht notwendig, dass das SDS großenteils bereits fertig gestellt ist, sondern implementierte Teile des SDS können direkt getestet und ausgewertet werden. Dies ermöglicht ein verhältnismäßig realitätsnahes einfaches Testen und Auswerten von SDS aus beliebigen Anwendungsgebieten beziehungsweise Domänen. Zudem kann mit einem solchen Evaluationssystem auch ermöglicht werden, dass SDS und auch Teile davon frühzeitig während deren Entwicklung getestet und ausgewertet werden.

Die Auswerteeinheit kann dazu ausgestaltet sein, dass die gesamte Evaluation des SDS und der Testablauf von einem Benutzer des Evaluationssystems definiert werden, wozu sie insbesondere eine grafische Benutzeroberfläche zur Interaktion generieren kann. Beispielsweise können einzelne zu testende Dialogbereiche oder Aufgaben zusammen mit damit im Zusammenhang stehender Parameter, wie beispielsweise Kundennummer oder Name, definiert werden. Wahlweise können bei den Parametern auch Alternativen definiert werden, aus denen die Auswerteeinheit dann zur Laufzeit eine auswählt. Dabei können die Parameter auch über reguläre Ausdrücke nach einem vorgegebenen Format zur Laufzeit variabel aufgebaut werde. Zum Beispiel kann eine Kundennummer, die eingegeben werden soll, als sechsstellig mit fünf Ziffern und einem abschließenden Buchstaben definiert werden. Über die grafische Benutzeroberfläche der Auswerteeinheit können beispielsweise auch die durchzuführenden Testläufe bestimmt werden, insbesondere in ihrer Anzahl, mit welchen Stereotypen oder Simulationseinstellungen und die zu testenden Aufgaben. Die Auswerteeinheit kann auch dazu ausgestaltet sein mehrere verschiedene seriell nacheinander abzuarbeiten. Zudem kann sie auch dazu ausgestaltet sein, verschiedene Varianten einer Eigenschaft hintereinander durchlaufen zu lassen. Zum Beispiel kann eine zu testende Eigenschaft von Durchlauf zu Durchlauf schrittweise von 0% bis 100% erhöht werden.

Vorzugsweise ist die Kommunikationseinheit dazu ausgestaltet, den Dialog mit dem Sprachdialogsystem in gesprochener Sprache zu führen. Die Kommunikationseinrichtung kann zu diesem Zweck Spracherzeugungsmittel aufweisen, mit denen Sprachmitteilungen generiert werden können, die dann beispielsweise über einen Lautsprecher der akustischen Schnittstelle oder über eine elektrische Schnittstelle an das SDS übermittelt werden. Die Schnittstelle kann weiter ein Mikrophon umfassen, das Sprachmitteilungen des SDS erfassen kann, die dann von Spracherkennungsmitteln der Kommunikationseinheit ausgewertet beziehungsweise beispielsweise in geschriebenen Text überführt werden können. Mit einem solchen Evaluationssystem kann das SDS verhältnismäßig realitätsnah über die gleiche Kommunikationsart getestet und ausgewertet werden, die im Betrieb des SDS auch einem Benutzer zur Verfügung steht. Dabei umfasst die Kommunikationseinheit vorzugsweise Konfigurationsmittel, mit denen einstellbar ist, ob der Dialog mit dem Sprachdialogsystem in gesprochener Sprache oder in geschriebener Sprache zu führen ist. Damit kann je nach Situation eine geeignete Kommunikationsform zwischen Evaluationssystem und SDS bereitgestellt werden. Beispielsweise kann somit das SDS über geschriebenen Text beziehungsweise Textdateien auch in einer Entwicklungsstufe des SDS getestet und ausgewertet werden, in der das SDS noch keine fertige Spracherkennungsmittel und Spracherzeugungsmittel umfasst.

Bevorzugt ist die Auswerteeinheit dazu ausgestaltet, den Ablauf des Dialogs mit dem Sprachdialogsystem laufend auszuwerten. Mit einer solchen Auswerteeinheit kann das Evaluationssystem laufend einen Wert zur Benutzbarkeit des SDS oder bestimmter Teile davon oder auch eines einzelnen Dialogschritts ausgeben. Im Gegensatz zu herkömmlichen Testsystemen, bei denen jeweils ein Bericht über die Benutzbarkeit des SDS nach einem abgeschlossenen Testlauf generiert wird, ermöglicht dies ein laufendes flexibles Austesten des SDS auch während seiner eigentlichen Nutzungsphase. Dabei umfasst der Dialog typischerweise mehrere Dialogschritte, wobei die Auswerteeinheit vorzugsweise dazu ausgestaltet ist, den Ablauf des Dialogs mit dem Sprachdialogsystem nach jedem Dialogschritt des Dialogs auszuwerten. Dies kann eine einfache effiziente Realisierung des laufenden Auswertens des SDS darstellen.

Die Auswerteeinheit ist dabei bevorzugt dazu ausgestaltet, aus Kennwerten über bereits durchgeführte Dialogschritte des Dialogs mit dem Sprachdialogsystem nach jedem Dialogschritt des Dialogs eine Beurteilung zu ermitteln. Die Beurteilung kann insbesondere eine Abschätzung sein, mit welcher Wahrscheinlichkeit ein Nutzer des SDS eine bestimmtes Urteil abgibt. Das Urteil kann beispielsweise eine Zuweisung eines Wertes in einem bestimmten Bereich sein, wobei jeder Wert eine bestimmte Qualität repräsentiert. Beispielsweise kann das Urteil ein ganzzahliger Wert von eins bis fünf sein, wobei eins eine schlechte Qualität repräsentiert und fünf eine exzellente Qualität. Damit kann eine einfache übersichtliche Beurteilung erreicht werden. Dabei ist die Auswerteeinheit vorzugsweise dazu ausgestaltet, statistische Verfahren und insbesondere Hidden-Markov-Modelle einzusetzen, um die Beurteilung zu ermitteln. Hidden-Markov-Modelle sind heute beispielsweise aus der Gestenerkennung in der Mensch-Maschine-Interaktion bekannt. Sie entsprechen als Form eines dynamischen Bayes'schen Netzes stochastischen Modellen, die sich durch zwei Zufallsprozesse beschreiben lassen. Der erste Zufallsprozess entspricht dabei einer Markow-Kette, die durch Zustände und Übergangswahrscheinlichkeiten gekennzeichnet ist. Die Zustände der Kette sind von außen jedoch nicht direkt sichtbar. Stattdessen erzeugt der zweite Zufallsprozess zu jedem Zeitpunkt beobachtbare Ausgangssymbole beziehungsweise Emissionen gemäß einer zustandsabhängigen Wahrscheinlichkeitsverteilung. Die Auswerteeinheit kann unter Einsatz von Hidden-Markov-Modellen die Kennwerte als Emission und die Urteile als Zustände modellieren. Die Berechnung der Beurteilung kann mittels Forward Recursion erfolgen, wobei für jeden Dialogschritt des Dialogs eine Transition von einem Zustand zum nächsten stattfindet. Unter dem Begriff "Forward Recursion" wird hier die Berechnung der Wahrscheinlichkeit jeden Zustands im aktuellen Schritt auf Basis von Wahrscheinlichkeiten aller Zustände im vorherigen Schritt und Wahrscheinlichkeit der beobachteten Emission für die Zustände verstanden.

Vorzugsweise umfasst das Evaluationssystem eine Berichteinheit, mittels der ein Bericht über die Auswertung des Ablaufs des Dialogs mit dem Sprachdialogsystem durch die Auswerteeinheit erzeugbar ist. Die Berichteinheit kann dabei so mit der Auswerteinheit verbunden sein, dass sie die Resultate der von der Auswerteeinheit erzeugten Auswertung des SDS in einem Bericht zusammenfasst beziehungsweise gliedert. Ein solcher Bericht kann beispielsweise zur Darstellung an einem Bildschirm ausgestaltet sein, wobei die Berichteinheit dazu ein Fenster auf dem Bildschirm generieren kann, in dem die Resultate beziehungsweise eine Zusammenfassung davon gegliedert dargestellt wird. Oder ein solcher Bericht kann zum Ausdrucken auf Papier ausgestaltet sein, wobei die Berichteinheit dazu direkt einen Drucker ansteuern kann oder eine druckbare Datei erzeugen kann.

Die Benutzersimulationseinheit umfasst Konfigurationsmittel, mit denen ein Benutzerprofil einstellbar ist. Ein Benutzerprofil beziehungsweise ein Stereotyp entspricht in diesem Zusammenhang einer Gruppe von Benutzern mit ähnlichen Verhaltenscharakteristiken. Diese können sich beispielsweise auf die Art und Weise der Antwort oder der Verwendung von Barge-Ins beziehen. Die Art und Weise der Antwort kann beispielsweise über den Kooperationsgrad eines Benutzers, wie die Anzahl an Informationen, die in einer Antwort gegeben werden, und/oder den Sprachstil, wie kurze oder lange Antworten beziehungsweise Satzfragmente, bestimmt werden. Unter dem Begriff "Barge-In" wird in diesem Zusammenhang ein Unterbrechen eines Systemprompts durch den Benutzer verstanden, zum Beispiel um direkt zu einem nächsten beziehungsweise anderen Dialogschritt zu gelangen. Beispielsweise können zwei Benutzerprofile wie "Laie" und "Experte" in der Benutzersimulationseinheit unterschieden werden, die dann entsprechend ausgewählt werden können. Eine solche konfigurierbare Benutzersimulationseinheit kann eine zielgerechte einfache Auswertung der Benutzbarkeit des SDS ermöglichen. Die Konfigurationsmittel der Benutzersimulationseinheit können auch dazu ausgestaltet sein, dass Benutzermerkmale und Simulationseinstellungen von einem Benutzer des Evaluationssystems angepasst werden. Dabei kann ermöglicht werden, dass entweder einzelne Merkmale ein- oder ausgeschaltet werden oder insbesondere dass die Auftretenswahrscheinlichkeit eines Merkmals beispielsweise über einen Regler verstärkt oder abgeschwächt wird. Somit ist es möglich, den Benutzer des SDS zur Laufzeit zu simulieren. Auch können die Konfigurationsmittel der Benutzersimulationseinheit dazu ausgestaltet sein, die Merkmale des Benutzers zur Laufzeit anzuzeigen und ein Anpassen davon zu ermöglichen.

Das Evaluationssystem umfasst eine Lerneinheit, mittels der aufgezeichnete Sprachdialogsystemdialoge auswertbar sind, wobei dabei Regeln für die Benutzersimulationseinheit und/oder die Aufgabensimulationseinheit abgeleitet werden. Eine solches Evaluationssystem kann also selbstlernend ausgestaltet werden, so dass zusätzlich zu bereits vordefinierten Regeln und Eigenschaften der Benutzersimulationseinheit beziehungsweise der Aufgabensimulationseinheit die Regeln und Eigenschaften laufend verfeinert und angepasst werden können. Unter anderem kann dies insbesondere ermöglichen, dass das Evaluationssystem bezüglich der Anwendungsgebiete beziehungsweise Domänen, für die es SDS testet und auswertet, automatisch laufend spezialisiert und verbessert wird.

Bevorzugt umfasst die Wissensdatenbank Objekte, Relationen bezüglich der Objekte zueinander und Aktionen. Mit einer solchen Wissensdatenbank können einerseits grundlegende domänenübergreifende Simulationskonfigurationen und -einstellungen definiert werden sowie auch für spezifische für bestimmte Domänen. Zudem kann die Wissensdatenbank so auch durch die Lerneinheit laufend verfeinert und angepasst werden.

Vorzugsweise umfasst die Wissensdatenbank Konfigurationsmittel, mit denen ein Gebiet für das Sprachdialogsystem einstellbar ist. Unter dem Begriff Gebiet wird in diesem Zusammenhang das Anwendungsgebiet beziehungsweise die Domäne der SDS verstanden. Insbesondere wenn die Wissensdatenbank Daten beziehungsweise Simulationskonfigurationen und -einstellungen aus verschiedenen Domänen umfasst und das Evaluationssystem für das Auswerten von SDS aus verschiedenen Domänen vorgesehen ist, kann somit das Evaluationssystem auf einfache Weise für SDS einer bestimmten Domäne konfiguriert werden. Die Konfigurationsmittel der Wissensdatenbank können dazu dem Benutzer des Evaluationssystems beispielsweise über eine grafische Benutzeroberfläche eine Auswahl von verschiedenen Domänen anbieten. Zudem können sie auch eine sonstige Domäne zur Auswahl anbieten, falls das SDS keiner vordefinierten Domäne zuordbar ist oder sie können das Generieren neuer Domänen anbieten. Ebenfalls können sie die Auswahl mehrerer Domänen gleichzeitig ermöglichen, für den Fall, dass ein auszuwertendes SDS mehrere Domänen gleichzeitig betrifft.

Bevorzugt umfasst das Evaluationssystem Interaktionsmittel, mit denen eine grafische Benutzeroberfläche erzeugbar ist, über die ein Benutzer des Evaluationssystems Einstellungen am Evaluationssystem vornehmen kann. Eine solche Benutzeroberfläche kann eine komfortable effiziente Bedienung des Evaluationssystems ermöglichen, wobei die Einstellungen insbesondere die Domäne, den Ablauf des Dialogs beziehungsweise der zu testenden Aufgabe und den Benutzer betreffen. Dabei umfassen die Einstellungen am Evaluationssystem vorzugsweise Einstellungen aus der Gruppe bestehend aus thematischer Spezifizierung des Sprachdialogsystems, Auswahl eines Benutzerprofils, Definieren des Ablaufs des Dialogs und Festlegen der Art des zu führenden Dialogs mit dem Sprachdialogsystem.

Ein weiterer Aspekt der Erfindung betrifft ein Computerprogramm, das dazu ausgestaltet ist, auf einem Computer ausgeführt zu werden, um das oben beschriebene Evaluationssystem zu implementieren. Ein solches Computerprogramm ermöglicht ein einfaches Implementieren und Verteilen des Evaluationssystems.

### Kurze Beschreibung der Zeichnungen

Im Folgenden wird das erfindungsgemäße Evaluationssystem unter Bezugnahme auf die beigefügten Zeichnungen anhand von Ausführungsbeispielen detaillierter beschrieben. Es zeigen:
- Fig. 1: eine schematische Übersicht eines Ausführungsbeispiels des erfindungsgemäßen Evaluationssystems; und
- Fig. 2: eine schematische Ansicht des Aufbaus des Evaluationssystems von Fig. 1.

### Weg(e) zur Ausführung der Erfindung

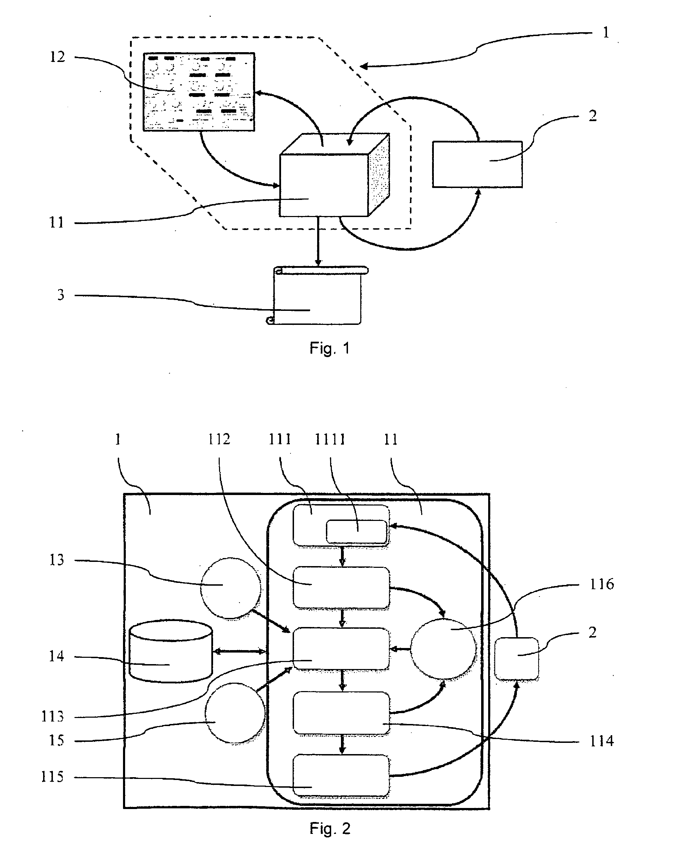

In Fig. 1 ist eine Übersicht eines Evaluationssystems 1 gezeigt. Das Evaluationssystem 1 umfasst eine auf einem Computer ausgeführte Rechnereinheit 11, die zur Kommunikation mit einem Evaluator beziehungsweise einem Benutzer des Evaluationssystems eine grafische Benutzeroberfläche 12 von Interaktionsmitteln auf einem mit dem Computer verbundenen Bildschirm erzeugt. Wie mit dem Pfeil von der grafischen Benutzeroberfläche 12 in Richtung Rechnereinheit 11 angedeutet kann der Evaluator über die grafische Benutzeroberfläche 12 Konfigurationseingaben für das Evaluationssystem 1 machen. Wie mit dem Pfeil von der Rechnereinheit 11 in Richtung der grafischen Benutzeroberfläche 12 angedeutet gibt die Rechnereinheit 11 über die grafische Benutzeroberfläche 12 Feedback an den Evaluator. Die Rechnereinheit 11 ist über eine Sprachschnittstelle mit einem zu evaluierenden beziehungsweise zu testenden und auszuwertenden Sprachdialogsystem 2 (SDS) verbunden. Wie mit den Pfeilen zwischen dem SDS 2 und der Rechnereinheit 11 angedeutet können das Evaluationssystem 1 und das SDS 2 in beide Richtungen miteinander kommunizieren. Die Rechnereinheit 11 beziehungsweise deren Berichterzeugungsmittel kann weiter Berichte 3 über die Auswertung des SDS 2 erzeugen und ausgeben.

Das Evaluationssystem 1 ist über die grafische Benutzeroberfläche 12 einfach in seiner Bedienung beziehungsweise konfigurierbar und kann auch mit wenigen Voreinstellungen eine Evaluation des SDS 2 durchführen. Um nach Bedarf jedoch eine genauere Auswertung des SDS 2 aus dem Evaluationssystem 1 zu erlangen, können detaillierte Einstellungen vorgenommen werden. Der Evaluator des Evaluationssystems 1 kann durch die grafische Benutzeroberfläche 12 Testläufe definieren und einzelne Einstellungen vornehmen. Die grafische Benutzeroberfläche 12 ist in verschiedene Aufgabenbereiche untergliedert, die im Folgenden beschrieben sind:

Voreinstellungen: Zunächst soll die Art der Kommunikation, bzw. die Schnittstelle zum SDS 2 über die grafischen Benutzeroberfläche 12 definiert werden. Die Kommunikation kann entsprechend einer realen Anwendung des SDS 2 mittels Sprache (z.B. über ein Telefon) mittels einer textbasierten Schnittstelle sowie mittels semantischer Konzepte erfolgen. Des Weiteren wird die Möglichkeit gegeben, das zu evaluierende SDS 2 thematisch zu spezifizieren. Dabei kann aus einer gewissen Auswahl von verschiedenen Anwendungsgebieten beziehungsweise Domänen eine passende Domäne ausgewählt werden. Kann das SDS 2 keinem der gegebenen Themen zugeordnet werden, so kann das Thema als Sonstiges definiert oder eine neue Domäne erstellt werden. Eine Mehrfachauswahl ist dabei ebenfalls möglich.

Simulationseinstellung: Auf einer Simulationsoberfläche der grafischen Benutzeroberfläche 12 kann zwischen verschiedenen zu simulierenden Benutzerstereotypen (z.B. Laie oder Experte) ausgewählt werden. Dabei können verschiedene zugrunde liegende Benutzermerkmale und Simulationseinstellungen manipuliert werden. Bei Manipulation der Schalter werden nicht lediglich einzelne Eigenschaften ein- und ausgeschaltet, sondern die Auftrittswahrscheinlichkeit eines Merkmals verstärkt oder abgeschwächt. Auf der Simulationsoberfläche werden je die Merkmale des zur Laufzeit simulierten Benutzers, sowie seine konkret getroffenen Entscheidungen als Feedback von der Rechnereinheit 11 angezeigt. Hierbei ist es während der Interaktion mit einem SDS möglich, die Simulations- und Benutzereinstellungen zu ändern.

Evaluationseinstellungen: Mittels einer Evaluationsoberfläche der grafischen Benutzeroberfläche 12 kann die gesamte Evaluation und der Testablauf definiert werden. Einzelne zu testende Dialogbereiche oder Aufgaben können hier mitsamt dazu benötigter Parameter definiert werden (z.B. Kundennummer, Name etc.). Wahlweise können bei den Parametern diverse Alternativen definiert werden, aus denen das Evaluationssystem 1 beziehungsweise seine Rechnereinheit 11 zur Laufzeit eine auswählt. Parameter können ebenfalls über reguläre Ausdrücke nach einem vorgegebenen Format zur Laufzeit variabel aufgebaut werden (z.B. eine Kundennummer die eingegeben werden soll, kann als sechsstellig definiert werden, bestehend aus fünf Ziffern und einem abschließenden Buchstaben - diese wird dann zur Laufzeit zufällig von der Rechnereinheit 11 generiert). Auf der Evaluationsoberfläche werden die durchzuführenden Testläufe bestimmt - in ihrer Anzahl, mit welchen Stereotypen oder Simulationseinstellungen und die zu testenden Aufgaben. Verschiedene Testläufe können in Serie geschaltet werden. Es ist weiterhin möglich, verschiedene Varianten einer Eigenschaft (z.B. zu testende Eigenschaft wird von Durchlauf zu Durchlauf langsam von 0% auf 100% erhöht) hintereinander zu testen.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden Figuren verwiesen.

Fig. 2 zeigt den Aufbau des Evaluationssystem 1 und insbesondere seiner Rechnereinheit 11. Das Evaluationssystem 1 umfasst eine Wissensdatenbank 14 die mit der Rechnereinheit 11 verbunden ist, so dass die Rechnereinheit 11 Informationen und Daten aus der Wissensdatenbank 14 beziehen kann und darin speichern kann. Das Evaluationssystem 1 weist weiter eine Stereotypeinheit 13 einer Benutzersimulationseinheit und eine Zieleinheit 15 einer Aufgabensimulationseinheit auf. Die Rechnereinheit 11 umfasst eine automatische Spracherkennungseinheit 111 (ASR) einer Kommunikationseinheit mit einer zugehörigen Grammatik 1111, eine natürliche Sprachverständniseinheit 112 (NLU) der Kommunikationseinheit, einen Handlungsplaner 113 der Aufgabensimulationseinheit, einen Generator 114 einer Auswerteeinheit, eine Text-Zu-Sprache-Einheit 115 der Kommunikationseinheit und eine Dialoggeschichteeinheit 116 der Auswerteeinheit.

Bei der Darstellung der internen Funktionsweise des Evaluationssystems 1 von Fig. 2 ist das SDS 2 auf der rechten Seite gezeigt, wobei es das zu evaluierende Sprachdialogsystem darstellt. Die vom Evaluator gewählten Voreinstellungen und die der Simulation zugrunde liegenden Wissensbasen sind dabei links als die Wissensdatenbank 14, die Stereotypeinheit 13 und die Zieleinheit 15 dargestellt. Weiter ist in der Fig. 2 schematisch einen Interaktionsablauf des Evaluationssystems 1 mit dem SDS 2 gezeigt.

Bei der Interaktion zwischen dem Evaluationssystem 1 und dem SDS 2 ist zwischen einem herkömmlichen Simulationsmodus und Evaluationsmodus zu unterscheiden. Im Simulationsmodus ist vom Evaluator eine Aufgabe vorgegeben (z.B. die Stornierung eines bestimmten Fluges). Das Evaluationssystem 1 simuliert basierend auf den Voreinstellungen des Evaluators einen Dialog mit dem SDS 2, im Laufe dessen dieses Ziel erreicht werden soll. Das Evaluationssystem 1 benötigt für die Dialogführung keine speziellen Kenntnisse über den Aufbau oder die Dialogstruktur des zu evaluierenden SDS 2, da das Verhalten des Evaluationssystems 1 einer allgemeinen Dialogstrategie folgt. Diese Strategie wird aus aufgenommenen Beispieldialogen (mit einer großen Anzahl von Sprachdialogsystemen) berechnet. Die Dialogstrategie der Simulation des Evaluationssystems 1 soll dabei nicht die bestmögliche oder eleganteste, sondern eine möglichst realistische sein. Das bedeutet, dass sich das Verhalten an bereits beobachteten Verhaltensweisen von Benutzern in ähnlichen Situationen (ähnlicher Kontext) orientiert. Das Evaluationssystem 1 versucht nicht speziell einen gesonderten Benutzer, sondern ein allgemein mögliches Verhalten eines bestimmten Stereotypen mit verschiedenen Eigenschaften darzustellen. Hierbei werden Benutzer mit ähnlichen Verhaltensweisen zusammengefasst. Ein definierter Stereotyp besitzt kein fest vorgegebenes Verhalten, sondern umfasst für eine Vielzahl von Simulations- und Verhaltenseigenschaften unterschiedliche Übergangswahrscheinlichkeiten.

Im Folgenden werden die drei Module beziehungsweise Wissensbasen Stereotypeinheit 13, Zieleinheit 15 und Wissensdatenbank 14 detaillierter beschreiben.

Stereotypeinheit 13: Ein Stereotyp ist eine Gruppierung von Benutzern mit ähnlichen Verhaltenscharakteristiken. Diese beziehen sich beispielsweise auf die Art und Weise der Antwort (z.B. Kooperationsgrad eines Benutzers: Anzahl an Informationen die in einer Antwort gegeben werden, Sprachstil: kurze oder lange Antworten, Satzfragmente) oder der Verwendung von Barge-In. Zunächst sollen zwei Benutzergruppen unterschieden werden, Laien und Experten. Konkret ist ein Stereotyp als Merkmalsstruktur modelliert. Die verschiedenen Merkmale sind abhängig_{.} vom Typ unterschiedlich stark gewichtet. Sie werden durch Wahrscheinlichkeiten abgebildet (z.B. ein bestimmter Stereotyp antwortet auf eine Frage zu 90% in einem vollständigen Satz oder verwendet z.B. zu 60% auf eine bereits bekannte Frage Barge-In). Die Wahrscheinlichkeiten definieren kein fest vorgegebenes, sondern das in etwa erwartete Verhalten. Einzelne Unterscheidungsmerkmale zwischen den Stereotypen werden beispielsweise durch ein Clusteringverfahren aus dem Verhalten der Benutzer in einem Korpus gewonnen oder durch den Evaluator festgelegt; sie liefern so noch feinkörnigere Verhaltenscharakteristiken.

Zieleinheit 15: Ein Ziel entspricht einer Art Evaluationskonfiguration. Der Evaluator definiert hierbei zu Beginn die eigentliche Aufgabe, bzw. das Ziel des zu simulierenden Benutzers (z.B., "Paket Nr. xxx verfolgen"). Dazu müssen die zur Lösung benötigten Parameter definiert werden. Das Evaluationssystem 1 wird entsprechend dieser Vorgaben mit dem SDS 2 kommunizieren und die Aufgabe lösen beziehungsweise zu lösen versuchen. Eine Benutzersimulation ohne definierte Evaluationskonfguration (Ziel) ist ebenfalls vorgesehen. Hierbei interagiert das Evaluationssystem 1 in einem Expertenmodus selbstständig mit dem SDS 2. Dabei testet das Evaluationssystem 1 das SDS 2 auf verschiedene Funktionalitäten (z.B., Barge-in, unsinnige Eingaben) und bekannte Fehler.

Wissensdatenbank 14: Die Wissensdatenbank 14 ist die Basis des Evaluationssystems 1 und repräsentiert das Weltwissen des Evaluationssystems 1. Diese wird durch eine Ontologie beschrieben. In der Wissensdatenbank 14 werden alle im Evaluationssystem 1 verwendeten Objekte, ihre Relationen zueinander und durchführbaren Aktionen definiert. Die für die Zielführung benötigten Parameter werden als Instanzen dieses ontologischen Modells erstellt. Die Wissensdatenbank kann von Hand erstellt werden. Dem späteren Evaluator stellt das Evaluationssystem 1 ein Werkzeug zur leichten Anpassung der vorhandenen Ontologie an die Evaluationsdomäne (= das Thema des zu evaluierenden SDS 2) zur Hand.

Die Berechnung der Dialogstrategie läuft im Evaluationssystem 1 wie folgt ab: Das Evaluationssystem 1 simuliert realistisches Benutzerverhalten bei der generellen Interaktion mit Sprachdialogsystemen. Unter dem Begriff "realistisches Verhalten" wird in diesem Zusammenhang ein Verhalten verstanden, welches statistisch dem von echten Benutzern nahekommt. Dies ist im Evaluationssystem 1 direkt garantiert, indem die Wahrscheinlichkeiten, nach denen das Evaluationssystem 1 in einer bestimmten Situation reagiert, aus einer Datensammlung beziehungsweise dem Korpus abgeleitet werden. Der zugrundeliegende Korpus berücksichtigt Interaktionen von Benutzern mit unterschiedlichen Sprachdialogsystemen. Dabei wird das Benutzerverhalten, abhängig vom Kontext und losgelöst von der eigentlichen Thematik, gewonnen. Durch Anwendung von maschinellen Lernverfahren werden die möglichen generellen Dialogstrukturen extrahiert. Auf Grundlage solcher Übergangs- oder auch Verhaltenswahrscheinlichkeiten interagiert das Evaluationssystem 1 mit dem SDS 2, indem die Wahrscheinlichkeiten entweder direkt als Wahlwahrscheinlichkeiten für das Evaluationssystem 1 übernommen oder daraus adaptiert werden. Beispielsweise existieren in einer bestimmten Dialogsituation drei verschiedene Möglichkeiten von Handlungen, wie sich ein Benutzer verhalten kann. Zwei mögliche Stereotypen A und B unterscheiden sich in der Wahrscheinlichkeit, mit der eine bestimmte der drei Handlungen gewählt wird. Die einzelnen Wahrscheinlichkeiten sind aus dem Korpus gewonnen. Das Evaluationssystem 1 wählt in dieser Situation beispielsweise unter der Voreinstellung A mit 75% Wahrscheinlichkeit und unter der Voreinstellung B mit 85% Wahrscheinlichkeit die erste Handlung.

Im Evaluationsmodus muss nicht zwangsläufig eine konkrete Aufgabe definiert werden. Hierbei kann das Evaluationssystem 1 auch durch Benennung und Angabe selbst ausgewählter Informationen der Wissensbasis, sich unabhängig durch den Dialog bewegen. Durch den gezielten Einsatz verschiedener Fehler und fehlerhaften Verhaltensweisen wird das SDS 2 unter verschiedenen Gesichtspunkten geprüft. Jeder Testdurchlauf wird aufgezeichnet, damit die Daten am Ende der Evaluation ausgewertet werden können. Die aufgezeichneten Daten beinhalten beispielsweise Erfolg oder Misserfolg beim Lösen einer Aufgabe, Dauer der Interaktion, angewendete Simulationseinstellungen, Anzahl der benötigten Fragen, Wiederholungen usw. Diese Daten werden zur Erstellung eines Usability-Profils des SDS 2 in einem Usability-Modul der Auswerteeinheit des Evaluationssystems 1 verwendet.

Das Usability-Modul bekommt zu jedem durchgeführten Dialogschritt Kennwerte wie den aktuellen Dialogschritt, Nutzer- und Systemäußerung, die Dauer, Reaktionszeiten und Anzahl Fehler übermittelt, und nutzt diese Informationen, um während des Dialogs das Benutzerurteil zu ermitteln. Bisherige Ansätze aus dem Stand der Technik liefern die Nutzerbewertung erst im Anschluss an einen kompletten Dialog. Das Usability-Modul des Evaluationssystem 1 kann aber aufgrund von geeigneten eingesetzten statistischen Verfahren (Hidden-Markov-Modelle, HMM) zu jedem Zeitpunkt im Dialogverlauf abschätzen, mit welcher Wahrscheinlichkeit ein Nutzer ein Urteil von 1-5 ('schlecht'-'exzellent') abgibt. Dazu werden die oben beschriebenen Kennwerte als Emissionen des HMM und die Urteile als Zustände des HMM modelliert. Die Berechnung der Beurteilung erfolgt mittels Forward Recursion, wobei für jeden Dialogschritt eine Transition von einem Zustand des Modells zum nächsten stattfindet. Unter dem Begriff "Forward Recursion" wird in diesem Zusammenhang eine Berechnung der Wahrscheinlichkeit jeden Zustands im aktuellen Schritt auf Basis von Wahrscheinlichkeiten aller Zustände im vorherigen Schritt und Wahrscheinlichkeit der beobachteten Emission für die Zustände verstanden. Die HMM sind vorgängig auf aufgezeichneten Daten trainiert, zu denen Benutzerurteile für jeden Schritt vorliegen. Die ausgegebenen Wahrscheinlichkeiten für ein bestimmtes Urteil variieren zudem zwischen verschiedenen Benutzergruppen (typischer Kontrast: Laien-Experten), und auch dazu werden Angaben gemacht, also beispielsweise 20% aller Laien geben ein 'sehr gut', 25% ein 'gut', 10% der Experten geben ein 'sehr gut', 12% der Experten geben ein 'gut'.

Beispielsweise kann die Nutzerbewertung wie folgt in einer Tabelle zusammengefasst sein:

| Bewertung | Experten | Laien |
|---|---|---|
| | Verteilung in % | |
| Schlecht | 5% | 9% |
| Dürftig | 15% | 24% |
| Ordentlich | 38% | 57% |
| Gut | 32% | 9% |
| Ausgezeichnet | 10% | 1 % |

Neben den vorhergesagten Nutzerbewertungen kann man sich in einem der vom Evaluationssystem 1 erzeugten Berichte 3 beispielsweise einem Usability-Report auch typische Fehlerstellen im Dialog angeben lassen, sowie Kennwerte der Simulation wie die durchschnittliche Dialogdauer, die durchschnittliche Anzahl Fehler, die Anzahl erfolgreicher und nicht erfolgreicher Dialoge und Anzahl Dialogschritte, die zur Erfüllung der Aufgabe nötig waren.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können, ohne den Umfang und den Geist der folgenden Ansprüche zu verlassen. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Ausführungsformen und einzelne deren Merkmale vom Erfindungsgegenstand ausgeschlossen sein.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Ein Computerprogramm kann auf einem geeigneten Medium gespeichert sein und/oder vertrieben werden, wie beispielsweise auf einem optischen Speichermedium oder einem Festmedium, das zusammen mit oder als Teil von anderer Hardware bereitgestellt wird. Es kann auch in anderer Form vertrieben werden, wie beispielsweise über das Internet oder andere verkabelte oder unverkabelte Telekommunikationssysteme. Insbesondere kann ein Computerprogramm beispielsweise ein auf einem computerlesbaren Medium gespeichertes Computerprogrammprodukt sein, das dazu ausgestaltet ist, ausgeführt zu werden, um ein Verfahren zu implementieren, insbesondere das erfindungsgemäße Verfahren. Alle Bezugszeichen in den Ansprüchen sind nicht als den Umfang der Ansprüche einschränkend zu verstehen.

## Patentansprüche

1. Evaluationssystem (1) zum automatisierten Auswerten der Nutzbarkeit eines Sprachdialogsystems (2), welches Evaluationssystem (1) eine Benutzersimulationseinheit (13) zum Simulieren des Verhaltens eines Benutzers des Sprachdialogsystems (2), eine Aufgabensimulationseinheit (15, 113) zum Simulieren eines vom Sprachdialogsystem (2) zu bearbeitenden Ablaufs, eine Wissensdatenbank (14) und eine Auswerteeinheit (114, 116) umfasst, wobei ein Ablauf eines Dialogs mit dem Sprachdialogsystem (2) über den durch die Benutzersimulationseinheit (13) simulierten Benutzer und den durch die Aufgabensimulationseinheit (15, 113) simulierten Ablauf von der Auswerteeinheit (114, 116) mittels der Wissensdatenbank (14) auswertbar ist, **dadurch gekennzeichnet, dass** die Benutzersimulationseinheit (13) Konfigurationsmittel umfasst, mit denen ein Benutzerprofil einstellbar ist, wobei die Konfigurationsmittel zum Anpassen von Benutzermerkmalen und Simulationseinstellungen durch einen Benutzer des Evaluationssystems (1) ausgestaltet sind, und dass das Evaluationssystem (1) eine mit dem Sprachdialogsystem (2) verbindbare Schnittstelle, eine Kommunikationseinheit (111, 112, 115) und eine Lerneinheit umfasst, wobei die Kommunikationseinheit (111, 112, 115) dazu ausgestaltet ist, den Dialog mit dem Sprachdialogsystem (2) über die Schnittstelle zu führen, und wobei mittels der Lerneinheit aufgezeichnete Sprachdialogsystemdialoge auswertbar sind, wobei dabei Regeln für die Benutzersimulationseinheit (13) und/oder die Aufgabensimulationseinheit (15, 113) abgeleitet werden.

2. Evaluationssystem (1) nach Anspruch 1, bei dem die Kommunikationseinheit (111, 112, 115) dazu ausgestaltet ist, den Dialog mit dem Sprachdialogsystem (2) in gesprochener Sprache zu führen.

3. Evaluationssystem (1) nach Anspruch 2, bei dem die Kommunikationseinheit (111, 112, 115) Konfigurationsmittel umfasst, mit denen einstellbar ist, ob der Dialog mit dem Sprachdialogsystem (2) in gesprochener Sprache oder in geschriebener Sprache zu führen ist.

4. Evaluationssystem (1) nach einem der vorangehenden Ansprüche, bei dem die Auswerteeinheit (114, 116) dazu ausgestaltet ist, den Ablauf des Dialogs mit dem Sprachdialogsystem (2) laufend auszuwerten.

5. Evaluationssystem (1) nach Anspruch 4, bei dem der Dialog mehrere Dialogschritte umfasst, wobei die Auswerteeinheit (114, 116) dazu ausgestaltet ist, den Ablauf des Dialogs mit dem Sprachdialogsystem (2) nach jedem Dialogschritt des Dialogs auszuwerten.

6. Evatuationssystem (1) nach Anspruch 5, bei dem die Auswerteeinheit (114, 116) dazu ausgestaltet ist, aus Kennwerten über bereits durchgeführte Dialogschritte des Dialogs mit dem Sprachdialogsystem (2) nach jedem Dialogschritt des Dialogs eine Beurteilung zu ermitteln.

7. Evaluationssystem (1) nach Anspruch 6, bei dem die Auswerteeinheit (114, 116) dazu ausgestaltet ist, statistische Verfahren und insbesondere Hidden-Markov-Modelle einzusetzen, um die Beurteilung zu ermitteln.

8. Evaluationssystem (1) nach einem der vorangehenden Ansprüche, das eine Berichteinheit umfasst, mittels der ein Bericht über die Auswertung des Ablaufs des Dialogs mit dem Sprachdialogsystem (2) durch die Auswerteeinheit (114, 116) erzeugbar ist.

9. Evaluationssystem (1) nach einem der vorangehenden Ansprüche, bei der die Wissensdatenbank (14) Objekte, Relationen bezüglich der Objekte zueinander und Aktionen umfasst.

10. Evaluationssystem (1) nach einem der vorangehenden Ansprüche, bei dem die Wissensdatenbank (14) Konfigurationsmittel umfasst, mit denen ein Gebiet für das Sprachdialogsystem (2) einstellbar ist.

11. Evaluationssystem (1) nach einem der vorangehenden Ansprüche, das Interaktionsmittel umfasst, mit denen eine grafische Benutzeroberfläche erzeugbar ist, über die der Benutzer des Evaluationssystems Einstellungen am Evaluationssystem (1) vornehmen kann.

12. Evaluationssystem (1) nach Anspruch 11, bei dem die Einstellungen am Evaluationssystem (1) Einstellungen aus der Gruppe bestehend aus thematischer Spezifizierung des Sprachdialogsystems (2), Auswahl eines Benutzerprofils, Definieren des Ablaufs des Dialogs und Festlegen der Art des zu führenden Dialogs mit dem Sprachdialogsystem (2) umfasst.

13. Computerprogramm, das dazu ausgestaltet ist, auf einem Computer ausgeführt zu werden, um das Evaluationssystem (1) nach einem der vorangehenden Ansprüche zu implementieren.

## Claims

1. Evaluation system (1) for the automated evaluation of the usability of a language dialogue system (2), the evaluation system (1) comprising a user simulation unit (13) for simulating the behaviour of a user of the language dialogue system (2), a task simulation unit (15, 113) for simulating an operational sequence to be processed by the language dialogue system (2), a knowledge data base (14) and an evaluation unit (114, 116), wherein an operational sequence of a dialogue with the language dialogue system (2), via the user simulated by means of the user simulation unit (13) and the operational sequence simulated by the task simulation unit (15, 113), can be evaluated by the evaluation unit (114, 116) by means of the knowledge data base (14), **characterised in that** the user simulation unit (13) comprises configuration means with which a user profile can be selected, the configuration means being configured for adjusting user characteristics and simulation parameters by a user of the evaluation system (1), and **in that** the evaluation system (1) comprises an interface connectable to the language dialogue system (2), a communication unit (111, 112, 115) and a learning unit, wherein the communication unit (111, 112, 115) is configured to conduct the dialogue with the language dialogue system (2) via the interface, and wherein dialogues of the language dialogue system recorded by means of the learning unit can be evaluated, thereby deducing rules for the user simulation unit (13) and/or the task simulation unit (15, 113).

2. Evaluation system (1) according to claim 1, wherein the communication unit (111, 112, 115) is configured to conduct the dialogue with the language dialogue system (2) in spoken language.

3. Evaluation system (1) according to claim 2, wherein the communication unit (111, 112, 115) comprises configuration means by which it can be selected whether the dialogue with the language dialogue system (2) is to be conducted in spoken language or in written language.

4. Evaluation system (1) according to any one of the preceding claims, wherein the evaluation unit (114, 116) is configured to continuously evaluate the operational sequence of the dialogue with the language dialogue system (2).

5. Evaluation system (1) according to claim 4, wherein the dialogue comprises a plurality of dialogue steps, wherein the evaluation unit (114, 116) is configured to evaluate the operational sequence of the dialogue with the language dialogue system (2) after each step of the dialogue.

6. Evaluation system (1) according to claim 5, wherein the evaluation unit (114, 116) is configured to determine, after each step of the dialogue, an assessment based on characteristic values from already completed steps of the dialogue with the language dialogue system (2).

7. Evaluation system (1) according to claim 6, wherein the evaluation unit (114, 116) is configured to use statistical methods, and particularly hidden Markov models, to determine the assessment.

8. Evaluation system (1) according to any one of the preceding claims, comprising a reporting unit with which a report of the evaluation of the operational sequence of the dialogue with the language dialogue system (2) by the evaluation unit (114, 116) can be generated.

9. Evaluation system (1) according to any one of the preceding claims, wherein the knowledge data base (14) comprises objects, relations between the objects and actions.

10. Evaluation system (1) according to any one of the preceding claims, wherein the knowledge data base (14) comprises configuration means by which a domain for the language dialogue system (2) can be selected.

11. Evaluation system (1) according to any one of the preceding claims, comprising interaction means with which a graphic user interface can be generated that allows user of the evaluation system to make adjustments to the evaluation system (1).

12. Evaluation system (1) according to claim 11, wherein the adjustments to the evaluation system (1) comprise adjustments selected from the group consisting of thematic specification of the language dialogue system (2), selecting a user profile, defining the operational sequence of the dialogue and setting the type of dialogue to be conducted with the language dialogue system (2).

13. Computer program configured to be executed on a computer to implement the evaluation system (1) according to any one of the preceding claims.

## Revendications

1. Système d'évaluation (1) pour l'evaluation automatique de la possibilité d'utilisation d'un système de dialogue vocal (2), le système d'évaluation (1) comprenant une unité de simulation d'utilisateur (13) pour simuler le comportement d'un utilisateur du système de dialogue vocal (2), une unité de simulation de tâches (15, 113) pour simuler un déroulement à gérer par le système de dialogue vocal (2), une base de connaissances (14) et une unité d'évaluation (114, 116), un déroulement d'un dialogue avec le système de dialogue vocal (2) par l'intermédiaire de l'utilisateur simulé par l'unité de simulation d'utilisateur (13) et du déroulement simulé par l'unité de simulation de tâches (15, 113) pouvant être évalué par l'unité d'évaluation (114, 116) au moyen de la base de connaissances (14), **caractérisé en ce que** l'unité de simulation d'utilisateur (13) comprend des moyens de configuration permettant de paramétrer un profil d'utilisateur, les moyens de configuration étant conçus pour permettre à un utilisateur du système d'évaluation (1) d'adapter les caractéristiques d'utilisateur et paramètres de simulation, et **en ce que** le système d'évaluation (1) comprend une interface apte à être reliée au système de dialogue vocal (2), une unité de communication (111, 112, 115) et une unité d'apprentissage, l'unité de communication (111, 112, 115) étant conçue pour réaliser le dialogue avec le système de dialogue vocal (2) par l'intermédiaire de l'interface, et des dialogues avec le système de dialogue vocal enregistrés au moyen de l'unité d'apprentissage pouvant être évalués, permettant ainsi la déduction de règles pour l'unité de simulation d'utilisateur (13) et/ou l'unité de simulation de tâches (15, 113).

2. Système d'évaluation (1) selon la revendication 1, dans lequel l'unité de communication (111, 112, 115) est conçue pour réaliser le dialogue avec le système de dialogue vocal (2) en langue parlée.

3. Système d'évaluation (1) selon la revendication 2, dans lequel l'unité de communication (111, 112, 115) comprend des moyens de configuration permettant de paramétrer si le dialogue avec le système de dialogue vocal (2) doit être réalisé en langue parlée ou en langue écrite.

4. Système d'évaluation (1) selon l'une des revendications précédentes, dans lequel l'unité d'évaluation (114, 116) est conçue pour évaluer en continu le déroulement du dialogue avec le système de dialogue vocal (2).

5. Système d'évaluation (1) selon la revendication 4, dans lequel le dialogue comprend plusieurs étapes de dialogue, l'unité d'évaluation (114, 116) étant conçue pour évaluer le déroulement du dialogue avec le système de dialogue vocal (2) après chaque étape du dialogue.

6. Système d'évaluation (1) selon la revendication 5, dans lequel l'unité d'évaluation (114, 116) est conçue pour obtenir une appréciation à partir des valeurs caractéristiques relatives à des étapes du dialogue avec le système de dialogue vocal (2) déjà effectuées après chaque étape du dialogue.

7. Système d'évaluation (1) selon la revendication 6, dans lequel l'unité d'évaluation (114, 116) est conçue pour utiliser des méthodes statistiques, et notamment des modèles de Markov cachés, pour obtenir l'appréciation.

8. Système d'évaluation (1) selon l'une des revendications précédentes, comprenant une unité de rapport permettant de générer un rapport sur l'évaluation du déroulement du dialogue avec le système de dialogue vocal (2) par l'unité d'évaluation (114, 116).

9. Système d'évaluation (1) selon l'une des revendications précédentes, dans lequel la base de connaissances (14) comprend des objets, des relations des objets les uns par rapport aux autres et des actions.

10. Système d'évaluation (1) selon l'une des revendications précédentes, dans lequel la base de connaissances (14) comprend des moyens de configuration permettant de paramétrer un domaine pour le système de dialogue vocal (2).

11. Système d'évaluation (1) selon l'une des revendications précédentes, comprenant des moyens d'interaction permettant de générer une interface utilisateur graphique par l'intermédiaire de laquelle un utilisateur du système d'évaluation peut paramétrer le système d'évaluation (1).

12. Système d'évaluation (1) selon la revendication 11, dans lequel les paramétrages du système d'évaluation (1) comprennent des paramétrages du groupe composé de la spécification thématique du système de dialogue vocal (2), du choix d'un profil d'utilisateur, de la définition du déroulement du dialogue et de la détermination du type de dialogue à réaliser à l'aide du système de dialogue vocal (2).

13. Programme d'ordinateur conçu pour être exécuté sur un ordinateur pour mettre en oeuvre le système d'évaluation (1) selon l'une des revendications précédentes.
